# EUROPEAN PATENT APPLICATION

(11) **EP 4 531 159 A1**
(43) Date of publication of application: **02.04.2025**
(21) Application number: 23315368.3
(22) Date of filing: 26.09.2023
(51) Int. Cl.: H01M 10/0567, H01M 10/0525, H01M 4/525, H01M 10/0568, H01M 10/0569

(54) **ALUMINIUM-BASED ADDITIVE FOR BATTERIES**

(71) Applicant: Centre National de la Recherche Scientifique, 75016 Paris (FR); College de France, 75005 Paris (FR); SORBONNE UNIVERSITE, 75006 Paris (FR)
(72) Inventor: Tarascon, Jean-Marie, 75014 Paris (FR); Mariyappan, Sathiya, 75013 Paris (FR); Forero-Saboya, Juan, 75014 Paris (FR)
(74) Representative: Brevalex

(57) **Abstract**

An electrolyte composition which comprises a non-aqueous organic solvent, a conducting electrolyte salt, and at least one additive of formula (I): 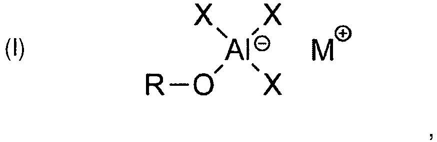 wherein M is a metal, X is H or -O-R and R is an alkyl and an electrochemical device comprising the electrolyte composition.

## Description

### Field of the invention

The invention relates to an electrolyte additive, in particular for Li-ion batteries, to a new electrolyte additive for lithium-ion batteries, particularly for batteries having nickel-rich cathode materials and to the battery, or cells, containing the same.

### Prior art

Lithium-ion batteries are widely used as an electrochemical device in applications covering various areas including but not limited to portable electronic devices, electric vehicles, hybrid electric vehicles, or stationary energy storage systems.

Lithium-ion batteries comprise at least one electrolyte which is designed for providing an ion conducting path between at least one first half-cell comprising at least one positive electrode and at least one second half-cell comprising at least one negative electrode of the electrochemical device. In general, the cells are not sufficiently stable with respect to the application of a high voltage, in particular of 4.5 V or above.

Growing interest in the industry to use nickel-rich cathode materials' which shows increased performance, in particular, in relation to energy density and/or power density. Such materials as, in particular, Ni-rich LiNi_{0.8}Co_{0.1}Mn_{0.1}O₂ (NCM811) have been considered as the most attractive cathode material for lithium-ion batteries (LIBs). However, the fast capacity decay and poor rate performance limit its practical applications². The capacity fading is related with surface reconstruction of the cathode material which is usually referred to as interface instability³.

In order to stabilise the Ni-rich oxide material the material can be coated with various compounds⁴. These coating steps are expensive and time consuming. Furthermore, they diminish the contact and interaction between the particles of the cathode active material and have therefore deleterious effect on the performance of the battery.

There is therefore a need to provide increased stability of the cathode material to be able to increase the number of cycles at the required capacity while minimising the costs of such a material.

### Description of the invention

It has unexpectedly been found that an aluminium-based organic compound admixed in the electrolyte composition can substantially slow the capacity fading of a lithium battery. This protective action is believed to be in part due to its capacity to provide an in-situ Al-coating on to the surface of the electrode.

One embodiment of the thus relates to an electrolyte composition particularly suitable for a lithium-ion battery, which comprises a non-aqueous organic solvent, a conducting electrolyte salt, and at least one additive of formula (I): 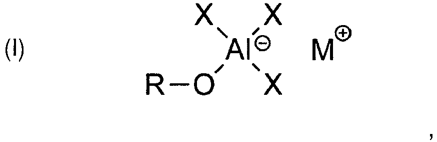 wherein M is a metal, X is H or -O-R and R is an alkyl. The metal is preferably an alkali such as Li, Na or K or an alkali earth such as Ca2 and Mg. As it will be directly understood, the metal M can advantageously be chosen to be the same as the one used as a charge carrier in the battery. For a lithium-ion battery, M will be lithium, for a sodium- ion battery, M will be sodium, etc.

The additive of formula I comprises at least one, and up to 4, alkoxy moiety R-O. Preferably, the additive comprises 3 or 4 alkoxy moieties or group. R can be identical or different and may be an alkyl having from 1 to 10, preferably from 1 to 5, carbon atoms. It is preferred that R be selected in the group consisting of -CH₃, CH₂CH₃,-CH(CH₃)₂, and -C(CH₃)₃.

As reported in the literature, the exact stoichiometry (the number of the alkoxy ligands in the final aluminate anion) depends strongly of the alcohol used and not necessarily of the amount of alcohol added. Small alcohols like methanol, ethanol or propanol will usually form the tetrasubstituted aluminate [Al(OR)4]⁻ directly, for example:

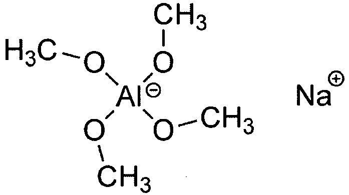

Bigger and bulky alcohols, like tert-butanol, phenol, CH(CH₃)₂, etc, will favour the formation of the trisubstituted aluminate [AlH(OR)₃]⁻. Thus when R is a group with high steric hindrance, such as ter-butyl group -C(CH₃)₃, trisubstituted aluminates may be easier to obtain and may be preferred. When the R-O group is smaller, such as a methoxy group, the additive may comprise 4 alkoxy groups.

A particularly effective additive is Li[AlH(OtBu)₃], having the following formula (II): 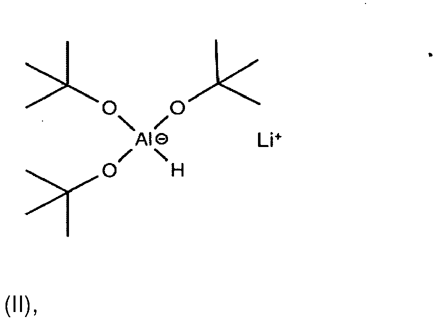 or Na[AlH(OtBu)₃].

The electrolyte salt may be chosen by the skilled person amongst those commonly used in the field. According to a particular embodiment of the invention, the electrolyte salt comprises, or consists of, a lithium salt, preferably selected from the group consisting of hexafluorophosphate (LiPF₆), lithium tetrafluoroborate (LiBF₄), lithium perchlorate (LiClO₄), lithium hexafluoroarsenate (LiAsF₆), lithium bis(oxal-ato)borate (LiBOB), lithium bis(trifluoromethanesulfonyl)imide (LiTFSI), lithium bis(fluorosulfonyl)imide (LiFSI) and mixtures thereof. It is particularly preferred to select hexafluorophosphate (LiPF₆) as the lithium salt, or at least one of the lithium salts.

The non-aqueous organic solvent may also be chosen by the skilled person amongst those commonly used in the field. Preferably the non-aqueous organic solvent is selected from the group consisting of propylene carbonate (PC), ethylene carbonate (EC), dimethyl carbonate (DMC), diethyl carbonate (DEC), ethyl methyl carbonate (EMC), tetrahydrofuran (THF), 1,2-dimethoxyethane (DME), 2-methyltetrahydrofuran (2Me-THF), trimethyl phosphate, triethyl phosphate, dimethyl methyl phosphonate, diethyl ethyl phosphonate, methyl acetate, methyl propionate, etc., and mixtures thereof.

It is particularly advantageous to select a non-aqueous organic solvent which comprises a mixture of ethylene carbonate and ethyl methyl carbonate. The ratio of a mixture of non-aqueous solvent may be adapted depending of the specification of the particular electrochemical device. When a mixture of ethylene carbonate and ethyl methyl carbonate is used, the relative ratio of these components can be ranging from 1:3 to 2:3, preferably from 2:5 to 1:2. A volume ratio of about 3:7 is particularly preferred.

Although compounds falling within the scope of formula I are generally commercially available, it was found that direct synthesis and/or freshly prepared compounds could present better performances and could advantageously be used. By "freshly prepared" it is meant that the additive be synthesised within 6 months, preferably within 1 month, more preferably within a week or even advantageously a couple of days from the preparation of the composition. Alternatively compounds protected from being exposed to air and/or moist air, after being synthesised are equally performant.

A method to prepare the compound of Formula I *in situ* follows the general chemical reaction: 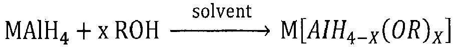 where M in this case is an alkali and n is 1, 2, 3 or 4. Briefly, the aluminium hydride (e.g., LiAlH₄) is dissolved in a solvent such as an ether (e.g., diethyl ether) or THF. Dried alcohol (e.g., tertbutyl) is added slowly under stirring, until the aluminate (e.g. Li[AlH(OtBu)₃]) precipitates and is dried.

The additive can be present within the electrolyte composition in a concentration of 0.001 wt.% to 5 wt.%, preferably 0.1 to 3 wt. %, more preferably around 2%.

The invention also relates to an electrochemical device or cell, such as lithium-ion battery or cell, which comprises:
- a cathode comprising a cathode material, and, preferably a negative electrode current collector
- an anode comprising an anode material, and, preferably a positive electrode current collector; and
- an electrolyte composition,
wherein said electrolyte composition is the electrolyte composition of the invention as defined in the specification.

In cases where the electrolyte is to some extent a liquid or a gel, the device of the present invention preferably comprises a separator. As a separator, materials having the form such as a porous film, a nonwoven fabric, or a woven fabric can be used. Examples of the above-described material of the separator include polyolefin resins such as polyethylene and polypropylene, fluororesins, and nitrogen-containing aromatic polymers.

The electrochemical device can be a rechargeable electrochemical cell. It can also be one or more electrochemical cells of the invention combined to provide a (rechargeable) battery pack. Further details regarding the manufacture and use of rechargeable electrochemical cells such as lithium-ion cells and batteries using the disclosed electrodes will be familiar to those skilled in the art.

In a lithium-ion battery according to the invention, the cathode material may comprise an active cathode material selected from the group consisting of LiV₃O₈, LiV₂O₅, LiCo_{0.2}Ni_{0.8}O₂, LNM, LNMC, LiNiO₂, LiFePO₄, LiMnPO₄, LiCoPO₄, LiMn₂O₄, LiCoO₂ and mixtures thereof. Preferably the active cathode material comprises a lithium nickel manganese oxide (LNMO) or a mixture thereof; for example, LiNi_{0.5}Mn_{1.5}O₄. It is also preferred that the active cathode material is chosen from the group consisting of lithium nickel manganese cobalt (LNMC) oxides, with or without a layer of aluminium, and a mixture thereof; in particular LiNi_{0.8}Mn_{0.1}Co_{0.1}O₂.

In a lithium-ion battery according to the invention, the anode material may comprise an anodic active anode material which may be selected from the group consisting of graphite, conductive carbon, silicon, a silicon/graphite composite, metallic lithium, lithium titanate, an alloy of lithium with at least one of tin, germanium, magnesium, aluminium, and zinc, and a transition metal-doped zinc oxide or tin oxide and mixtures thereof.

In a lithium-ion battery according to the invention, the current collector of either cathode or anode of the battery can comprise a metal foil, a metal grid, expanded metal, or metal foam. In further embodiments, the current collector of the positive electrode of the battery comprises nickel, aluminium, stainless steel, copper or a combination thereof.

In a sodium-ion battery of the invention, the cathode, or cathodic, active material may include a sodium metal, a sodium alloy, or a carbonaceous material such as a hard carbon capable of being doped and de-doped with sodium ions.

In sodium-ion battery of the invention the negative electrode current collector may be made of aluminium or aluminium alloy. Examples of the shape of the negative electrode current collector include, for example, foil, flat plate, mesh, net, lath, perforated metal or emboss, or a combination of these shapes (for example, meshed flat plate). Irregularities may be formed on the surface of the negative electrode current collector by etching the surface. A battery case and a structural support of the battery that are made of aluminium or aluminium alloy may act as a negative electrode current collector. Preferably, the aluminium alloy contains at least one metal component selected from the group consisting of Mg, Mn, Cr, Zn, Si, Fe, and Ni.

In a sodium-ion battery of the invention, the anode, or anodic, active material is a sodium inorganic compound, preferably a compound capable of being doped and de-doped with sodium ions. For example, they can be compounds such as NaFeO₂, NaMnO₂, NaNiO₂, and NaCoO₂; Na_{0.44}Mn₁₋ₐM¹ ₐO₂ and Na_{0.7}Mn₁₋ₐM¹ ₐO_{2.05} oxides wherein M¹ is at least one transition metal element, 0≦a<1; Na₆Fe₂Si₁₂O₃₀ and Na₂Fe₅Si₁₂O₃₀ oxides, Na₂Fe₂Si₆O₁₈ and Na₂MnFeSi₆O₁₈; oxides, Na₂FeSiO₆; phosphoric acid salts such as NaFePO₄ and Na₃Fe₂(PO₄)₃; boric acid salts such as NaFeBO₄ and Na₃Fe₂(BO₄)₃; and fluorides such as Na FeF₆ and Na₂MnF₆.

In sodium-ion battery of the invention the positive electrode current collector may include: metal such as nickel, aluminium, titanium, copper, gold, silver, platinum, aluminium alloy, or stainless steel; substances formed by plasma spraying or arc spraying, for example, carbonaceous materials, activated carbon fibre, nickel, aluminium, zinc, copper, tin, lead, or alloys thereof; and conductive films obtained by dispersing a conductive agent in a resin such as rubber or styrene-ethylene-butylene-styrene copolymer (SEBS).

According to another embodiment, the invention relates to the use of the additive or compound of formula (I) as described within this specification for the manufacture of electrochemical device and in particular as a component of an electrolyte composition and/or material part of, or contained within, said device. The electrochemical device is preferably a lithium-ion or sodium ion battery, in particular, a rechargeable battery.

A further object of the invention is a method to protect, at least partially, an electrode material contained within an electrochemical device as described in this specification by adding to the electrolyte material, or to the electrolyte composition, it also contains the additive or a compound of formula (I) as described above. This protection can be effected by the creation in situ of a protective layer upon the electrode material during the use of the device.

The electrochemical cells or battery of this disclosure can be used in a variety of devices, including portable computers, personal digital assistants, mobile telephones, motorized devices (e.g., personal or household appliances and vehicles), instruments, illumination devices (e.g., flashlights) and heating devices.

### Brief description of the Figures

**Figure 1**: Shows the X-ray diffraction (XRD) and an infra-red (IR) spectrum of LTBA obtained when synthesised according to the teaching of example 1 of the invention (labelled 'in house" and of LTBA purchased from the company Sigma-Aldrich.
**Figure 2****:** A coin cell battery according to an embodiment of the invention and an exploded view of its components.
**Figure 3****:** shows the discharge capacities of cells according to the invention up to 200 cycles at a C/3 rate as well as the ones of a control cell.
**Figure 4****:** shows NMR spectrum of a standard electrolyte (a) and of an electrolyte of the invention (b) after adding 1000 parts per million (ppm) of water and ageing for 24h.
**Figure 5****:** shows (a) An image by electronic microscopy of the surface of an electrode of a cell according to Example 2 after cycling, showing a layer of material cover the NMC particles and (b) the energy dispersive X-ray spectrum of the surface of the NMC surface of the positive electrode of a cell of the invention according to the embodiment of example 1, displaying the chemical composition of the electrode and evidencing the aluminium presence in the surface layer.
**Figure 6****:** shows (a) a charge/discharge graph of a cell using according to the embodiment of the invention of Example 3 (b) of its discharge capacities up to 50 cycles at a C/3 rate as well as the ones of the control cell, the cell using in-house LTBA, and the cell using the sodium analogue (NTBA)

### Example 1: Synthesis of LTBA

Lithium tri-(tert-butoxy)aluminium hydride (LTBA), linear formula [LiAlH[OC(CH₃)₃]₃ is a known compound, used as reducing agent in organic chemistry which has the semi-developed formula (II):

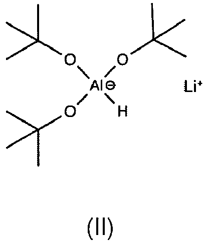

It can be obtained commercially (CAS Number:17476-04-9). In this example, LTBA was synthetised according to the following chemical reaction:

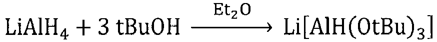

Lithium aluminium hydride (200 mg, 5.3 mmol, 1 eq.) is dissolved in diethyl ether and filtered through to obtain a transparent solution. Dried tert-butanol (1.21 g, 1.56 mL, 16.3 mmol, 3.1 eq.) is added dropwise under constant stirring, and emission of hydrogen gas is observed. When 3 eq. of the alcohol have been added, the solution stops bubbling and a white solid precipitates. After 1 h the solid, Li[AlH(OtBu)₃] is recovered, washed several times with fresh diethyl ether and dried under vacuum.

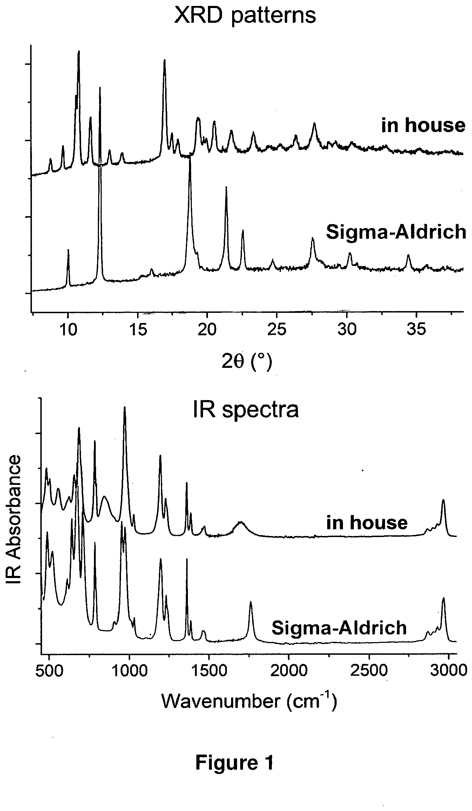

As can be seen from the XRD and IR spectra Fig. 1, the LTBA obtained by the above synthesis appears to differ from the commercial product obtained from the company Sigma Aldrich.

### Example 2: Manufacture of a cell according to the invention

To demonstrate the performance of a battery according to the invention, a coin-cell battery is assembled according to the schematic representation shown in figure 1. The coin cell (1) comprises a two-part can, a positive can (14) part and a negative can (3) part. A positive electrode film is positioned within the positive can (14) and is made of a 14 mm diameter aluminium disk. (12) covered with a mixture (11) of LiNi_{0.8}Mn_{0.1}Co_{0.1}O₂ , or NMC811, active material (95 % by weight), a conductive carbon (3 % by weight), and a polymeric binder (Polyvinylidene fluoride, PVDF, 2 % by weight). A negative electrode is provided opposite the positive electrode and is made of supporting 15 mm diameter copper disk (5) covered with a mixture (7) of Imerys GHDR 15-4 graphite as active material (94 wt. %), Cₛₚ as conductive carbon (2 wt. %), and two polymer binders: styrene butadiene rubber and carboxymethylcellulose, each at 2 wt. %. Opposite the surface of the copper disk (5) which supports the active mixture of carbon, graphite and binder materials (7) a small metal spring (4) is provided to maintain, in cooperation with the cell outer can, the components of the cell (1) in place and to provide a homogenous pressure across it. The electrode separator (9) is made of glass fibber disk, soaked with 150 µL of electrolyte and positioned between the positive and negative electrodes.

The electrolyte was made by dissolving 1 M LiPF₆ in a mixture of ethylene carbonate and ethyl methyl carbonate (volume ratio 3:7). This mixture is named LP57. To this mixture 2% by weight of LTBA, either synthesised according to the Example 1 or bought from the company Sigma Aldrich, were added.

To provide comparative and referential data on the cycling stability of the battery according to the invention a standard coin cell containing only LiPF₆ as an electrolyte but identical in any other aspects to the ones described above was assembled. This cell was designated as a control electrolyte.

The coin cells were assembled and closed inside an Ar-filled glovebox. They were taken out and cycled in a potentiostat-galvanostat according to the following procedure: two full charge/discharge cycles at C/20 current rate (C = 275 mA.h/gNMC), between 2.5 V and 4.3 V. The cells were then cycled continuously at a constant C/3 current rate in the same voltage window at room temperature.

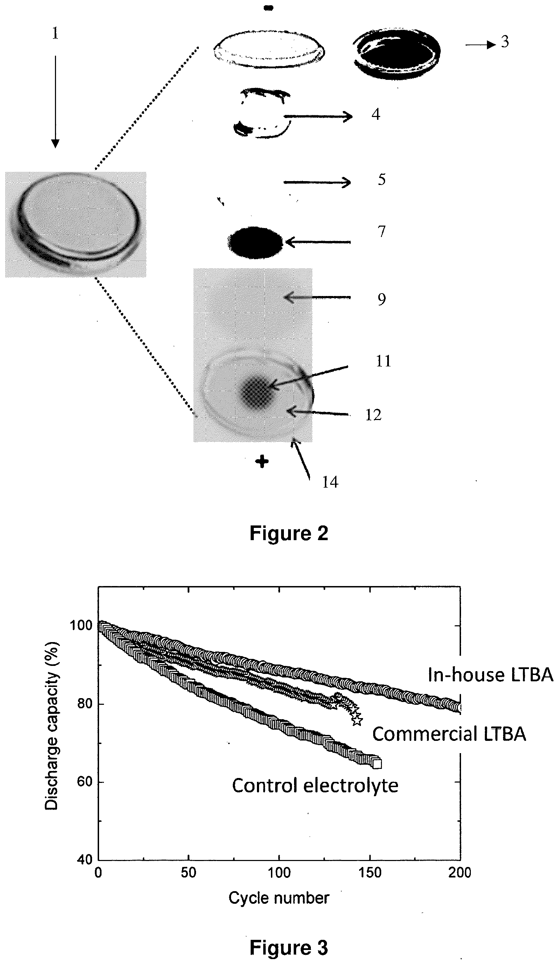

Figure 3 shows that using the cells according to the invention, provide for much improved discharged capacities. These results are surprising. Without willing to be bound by these explanations, investigations carried out by the inventors indicates that this beneficial effect is linked to possibly several actions.

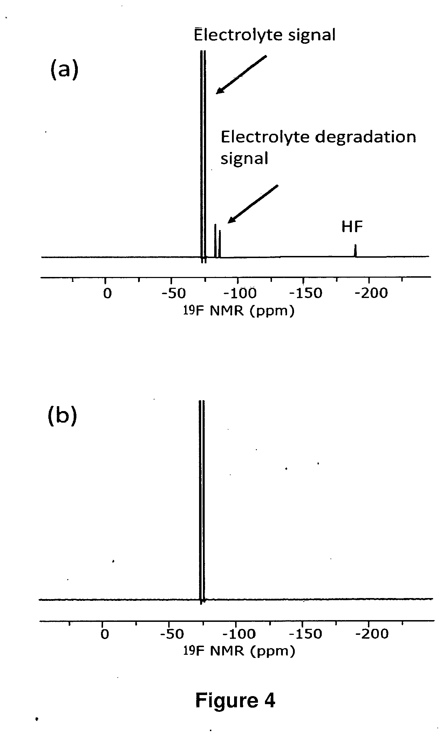

Small quantity of HF hydrofluoric acid and other products will be produced during the electrolyte ageing in the cell due to the degradation of the electrolyte material LiPF₆. In turn HF can react with the electrode and/or the electrolyte material in a deleterious manner. HF and electrolyte degraded material signals are shown by NMR spectrum in an aged control electrolyte (See Fig.4a). It is believed that the LTBA has a scavenging effect of HF, and prevent the occurrence and/or the action of hydrofluoric acid (HF) on the electrolyte. This is supported by the absence of signals indicative of HF and of degradation materials in the NMR spectrum of the electrolyte of the invention even after ageing (See Figure 4b).

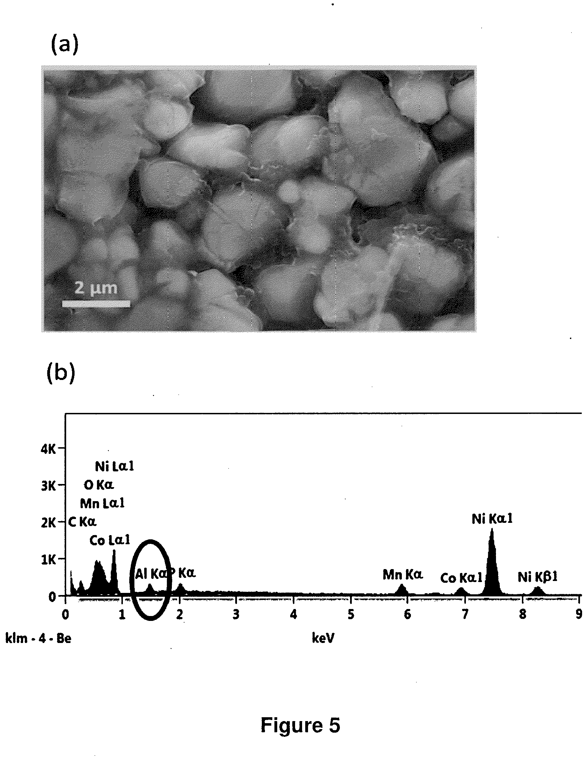

Another beneficial effect of the use of the electrolyte of the invention appears to be that it provides a protective coating on the positive electrode material. Figure 5 shows that a layer of material is deposited on the surface of the NMC electrode in a cell according to the invention and the additive component LTBA appears to decompose and to form a protective layer on the surface of the NMC electrode.

### Example 3: Manufacture of a cell according to the invention

According to another embodiment of the invention a battery was manufactured using sodium tri-tert-butoxyaluminium hydride, or Na tri-tert-butoxyaluminium hydride, or NTBA.

The NTBA was obtained by the following chemical reaction:

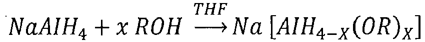

Sodium aluminium hydride (200 mg, 3.7 mmol, 1 eq.) is dissolved in tetrahydrofuran and filtered through to obtain a transparent solution. Dried tert-butanol (1.21 g, 1.56 mL, 16.3 mmol, 3.1 eq.) is added dropwise under constant stirring, and emission of hydrogen gas is observed. When 3 eq. of the alcohol have been added, the solution stops bubbling and a white solid precipitates. After 1 h the solid, Na[AlH(OtBu)₃] is recovered, washed several times with fresh tetrahydrofuran and dried under vacuum

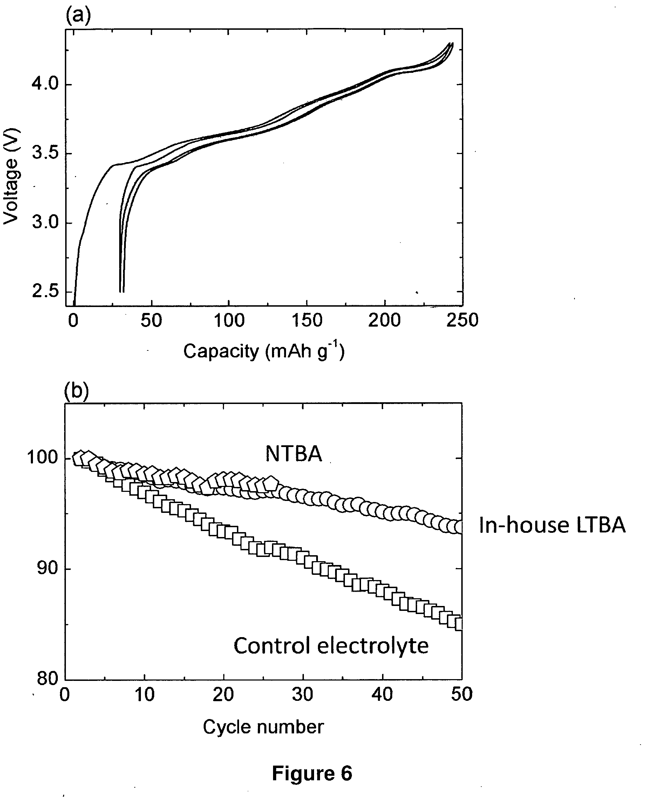

A coin cell identical to the one describes in example 2 was assembled except for the electrolyte composition which contained 2 wt. % of NTBA instead of LTBA. As shown in figure 6, the results are equivalent to the ones obtained with LTBA.

### References

1. Oswald, S. and Gasteiger, H.A. J. Electrochem. Soc. 2023, 170, 030506.
2. Li, J., Dahn, J.R., et al., J. Electrochem. Soc. 2015, 162, A1401.
3. Xu, C., Grey, C.P., et al., Nature Materials 2021, 20, 84-92.
4. Gao, Y., Park, J., Liang, X., ACS Appl. Energy Mater. 2020, 3, 8978-8987.

## Claims

1. An electrolyte composition which comprises a non-aqueous organic solvent, a conducting electrolyte salt, and at least one additive of formula (I): 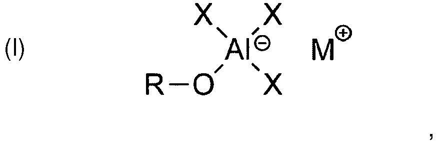 wherein M is a metal, X is H or -O-R and R is an alkyl.

2. The electrolyte composition according to Claim 1, wherein, in said formula (I), M is Li, Na or K.

3. The electrolyte composition according to Claim 1 or 2, wherein R, identical or different, is an alkyl having from 1 to 10, preferably from 1 to 5, carbon atoms, and more preferably is -CH₃, CH₂CH₃,-CH(CH₃)₂, or -C(CH₃)₃.

4. The electrolyte composition according to Claim 1, wherein said at least one additive is Li[AIH(OtBu)s] or Na[AlH(OtBu)₃].

5. The electrolyte composition according to any one of Claims 1 to 4, wherein the electrolyte salt comprises a lithium salt, preferably selected from the group consisting of hexafluorophosphate (LiPF₆), lithium tetrafluoroborate (LiBF₄), lithium perchlorate (L1ClO₄), lithium hexafluoroarsenate (LiAsF₆), lithium bis(oxal- ato)borate (LiBOB), lithium bis(trifluoromethanesulfonyl)imide (LiTFSI), lithium bis(fluorosulfonyl)imide (LiFSI) and mixtures thereof.

6. The electrolyte composition according to any one of Claims 1 to 5, wherein said lithium salt comprises hexafluorophosphate (LiPF₆).

7. The electrolyte composition according to any one of Claims 1 to 6, wherein the non-aqueous organic solvent is selected from the group consisting of propylene carbonate (PC), ethylene carbonate (EC), dimethyl carbonate (DMC), diethyl carbonate (DEC), ethyl methyl carbonate (EMC), tetrahydrofuran (THF), 1,2- dimethoxyethane (DME), 2-methyltetrahydrofuran (2Me-THF), trimethyl phosphate, triethyl phosphate, dimethyl methyl phosphonate, diethyl ethyl phosphonate, methyl acetate, methyl propionate etc and mixtures thereof.

8. The electrolyte composition according to any one of Claims 1 to 7, wherein said non-aqueous organic solvent comprises a mixture of ethylene carbonate and ethyl methyl carbonate, preferably in a volume ratio 3:7.

9. The electrolyte composition according to any one of Claims 1 to 8, wherein the at least one additive is present in a concentration of 0.001 wt.% to 5 wt.%, preferably 0.1 to 3 wt. %, more preferably around 2%.

10. An electrochemical device (1) comprising
- a cathode comprising a cathode material,
- an anode comprising an anode material (7), and
- an electrolyte,
wherein said electrolyte comprises the electrolyte composition according to any one of Claims 1 to 9.

11. The electrochemical device (1) according to claim 10, wherein said device (1) is a lithium battery.

12. The lithium-ion battery according to Claim 11, wherein said cathode material comprise a cathodic active compound selected from the group consisting of lithium nickel manganese oxides and a mixture thereof and preferably from the group consisting of lithium nickel manganese cobalt oxides and a mixture thereof; even more preferable the said compound is LiNi_{0.8}Mn_{0.1}Co_{0.1}O₂.

13. The lithium-ion battery according to Claim 11 or 12, wherein the anode material (7) comprises an anodic active anode compound selected from the group consisting of graphite, conductive carbon, silicon, a silicon/graphite composite, metallic lithium, lithium titanate, an alloy of lithium with at least one of tin, germanium, magnesium, aluminium, and zinc, and a transition metal-doped zinc oxide or tin oxide and mixtures thereof.

14. The lithium-ion battery according to any one of Claims 11 to 13, wherein said cathode material is not mixed with a compound of formula (I) as defined in Claim 1 to 4 and/or is not coated

15. Use of a compound of formula (I): 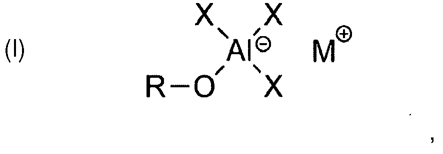 wherein M is a metal, X is H or -O-R and R is an alkyl, as an additive in an electrolyte composition and/or in the manufacture of an electrochemical device.
